(19) Europäisches Patentamt
European Patent Office
Office européen des brevets

(11) **EP 4 561 104 A1**

(12) **EUROPEAN PATENT APPLICATION**

(43) Date of publication:
**28.05.2025  Bulletin 2025/22**

(21) Application number: **24213384.1**

(22) Date of filing: **15.11.2024**

(51) International Patent Classification (IPC):
**H04R 1/32** $^{(2006.01)}$       **H04R 3/00** $^{(2006.01)}$

(52) Cooperative Patent Classification (CPC):
**H04R 3/00; H04R 1/323; H04R 2217/03; H04R 2499/13**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.11.2023  JP 2023198921**

(71) Applicant: **Alps Alpine Co., Ltd.**
**Ota-ku,**
**Tokyo 145-8501 (JP)**

(72) Inventor: **Uesugi, Haruki**
**Iwaki, Fukushima (JP)**

(74) Representative: **Schmitt-Nilson Schraud Waibel Wohlfrom**
**Patentanwälte Partnerschaft mbB**
**Pelkovenstraße 143**
**80992 München (DE)**

(54) **SPEAKER SYSTEM**

(57)  A speaker system includes an output sound generator configured to generate a sound to be output, an ultrasonic speaker, a speaker driver configured to drive the ultrasonic speaker and output a sound generated by the output sound generator, and a shock wave distance changer configured to change a distance at which a sound wave output from the ultrasonic speaker becomes a shock wave after propagating through air.

## FIG.1

**Description**

The disclosures herein relate to speaker systems in which a plurality of speakers are combined.

There has been known a vehicle presence notification apparatus which uses a speaker array in which a plurality of ultrasonic speakers are combined, and changes directivity of a notification sound by adjusting a phase of sound waves output from respective ultrasonic speakers (e.g., see JP 2011-31695 A).

Note that, the vehicle presence notification apparatus disclosed in JP 2011-31695 A can change the directivity of the entire speaker array by adjusting the phase of sound waves output from each speaker constituting the speaker array, but cannot change an output range of the notification sound. For example, it is not possible to switch between a case of outputting the sound toward a distant area and a case of outputting the sound over a wide range around the vehicle in accordance with a situation of a traveling vehicle.

It is an object of the present invention to provide a speaker system capable of switching the output range of sound.

The present disclosure relates to a speaker system according to the appended claims. Embodiments are disclosed in the dependent claims. A speaker system according to an aspect of the present disclosure includes an output sound generator configured to generate a sound to be output, an ultrasonic speaker, a speaker driver configured to drive the ultrasonic speaker and output a sound generated by the output sound generator, and a shock wave distance changer configured to change a distance at which a sound wave output from the ultrasonic speaker becomes a shock wave after propagating through air.

When the distance traveled until the shock wave forms is long, since difference tones between two kinds of carrier waves are repeatedly generated and synthesized during the time until the shock wave forms, these difference tones become virtual sound sources and are synthesized along the direction in which the sound waves travel, thereby narrowing the directional characteristics. Conversely, when the distance traveled until the shock wave forms is short, the length in which the virtual sound sources extend becomes short, and the sound waves are diffused in a spherical shape from the position where the virtual sound sources disappear, thereby widening the directional characteristics. Thus, by changing the distance at which the shock wave forms, the directional characteristics can be changed, and the output range of the sound radiated from the speaker can be switched.

It is preferable that the shock wave distance changer is configured to change the distance by sending an instruction to the speaker driver to change an initial sound pressure of the sound wave output from the ultrasonic speaker. It is also preferable that the shock wave distance changer is configured to change the distance by sending an instruction to the speaker driver to change a carrier frequency of the sound wave output from the ultrasonic speaker. Moreover, it is preferable that the shock wave distance changer is configured to change the distance by sending an instruction to the speaker driver to change an initial sound pressure of the sound wave output from the ultrasonic speaker, and to change a carrier frequency of the sound wave output from the ultrasonic speaker.

A shock wave is generated by a cumulative increase in collapse of a sound wave's waveform as propagation of each cycle is repeated, and is more likely to occur at a shorter distance as a distortion of the waveform increases at a higher volume (larger initial sound pressure). In addition, the higher a carrier frequency and the greater a number of propagation times of the waveform of one cycle, the more likely it is to occur at a shorter distance. For these reasons, the directional characteristics, that is, the output range of the sound radiated from the speaker can be switched by changing at least one of the initial sound pressure and the carrier frequency.

It is preferable that the system further includes a surrounding situation determiner configured to determine surrounding situations, wherein the shock wave distance changer is configured to change the distance according to the surrounding situations determined by the surrounding situation determiner. This enables the system to switch the directional characteristics between wide and narrow according to the surrounding situations.

Further, it is preferable that the speaker system is to be mounted on a vehicle and is configured to output a sound to notify people around the vehicle of approach of the vehicle, the surrounding situation determiner is a speed acquirer configured to acquire a traveling speed of the vehicle, and the shock wave distance changer is configured to send an instruction to set the distance long such that directional characteristics of the sound output from the speaker become narrow when the traveling speed acquired by the speed acquirer is high, and set the distance short such that directional characteristics of the sound output from the speaker become wide when the traveling speed acquired by the speed acquirer is low. Thus, the sound to notify pedestrians and the like around the vehicle of the vehicle's approach can be widely heard when the vehicle is traveling at a low speed, and the sound to notify pedestrians and the like at a slightly distant place of the vehicle's approach can be heard when the vehicle is traveling at a medium speed or higher.

Further, it is preferable that the speaker system is to be mounted on a vehicle and is configured to output a sound to notify people around the vehicle of approach of the vehicle, the surrounding situation determiner determines whether a traveling location of the vehicle is in an urban area or a suburban area, and the shock wave distance changer is configured to send an instruction to set the distance long such that directional characteristics of the sound output from the speaker become narrow when the traveling location of the vehicle is determined to be in a suburban area, and set the distance short such that directional characteristics of the sound output from the speaker become wide when the traveling location of the vehicle is determined to be in an urban area. Thus, the sound to notify pedestrians and the like around the vehicle of the vehicle's approach can be widely heard in the urban area, where it is probable that there are many pedestrians around the vehicle, and the sound to notify pedestrians and the like at a slightly distant place of the vehicle's approach can be heard in the suburban area, where there are comparatively few people.

Further, it is preferable that the shock wave distance changer is configured to alternate the distance between long and short. Thus, the sound radiated from the speaker can be heard in both nearby and distant surrounding areas.

Further, it is preferable that the surrounding situation determiner includes an imaging unit configured to capture an image of surroundings, and an image analyzer configured to analyze the surrounding situations according to the image captured by the imaging unit, and the shock wave distance changer is configured to switch the distance between long and short according to the surrounding situations analyzed by the image analyzer. Thus, the directional characteristics the sound radiated from the speaker can be switched between wide and narrow after accurately grasping the surrounding situations.

Further, it is preferable that the surrounding situation determiner is a congestion state determiner configured to determine a state of surrounding congestion, and the shock wave distance changer is configured to switch the distance between long and short according to the surrounding state of congestion determined by the congestion state determiner.

Thus, the directional characteristics of the sound radiated from the speaker array can be switched between wide and narrow according to the state of surrounding congestion.

FIG. 1 is a drawing illustrating a configuration of a vehicle approach reporting apparatus according to an embodiment;
FIG. 2A is a drawing describing an exemplary waveform collapse at a position close to a speaker;
FIG. 2B is a drawing describing an exemplary waveform collapse at a position farther from the speaker;
FIG. 2C is a drawing describing an exemplary waveform collapse at a position much farther from the speaker;
FIG. 3A is a drawing describing an exemplary a sound field when a distance $x_s$ at which an N-wave forms is lengthened;
FIG. 3B is a drawing describing an exemplary sound field when the distance $x_s$ at which an N-wave forms is shortened;
FIG. 4 is a drawing illustrating a specific example of switching the directional characteristics of the speaker according to the traveling speed of the vehicle;
FIG. 5 is a drawing illustrating a specific example of switching the directional characteristics of the speaker when the traveling location of the vehicle is either urban or suburban;
FIG. 6 is a drawing illustrating a specific example of determining the surrounding situations based on an image of the surrounding area; and
FIG. 7 is a drawing illustrating a modification of changing the directional characteristics of the speaker according to the state of congestion in the room.

In the following, a vehicle approach reporting apparatus according to embodiments to which the speaker system of the present invention is applied will be described with reference to the accompanying drawings.

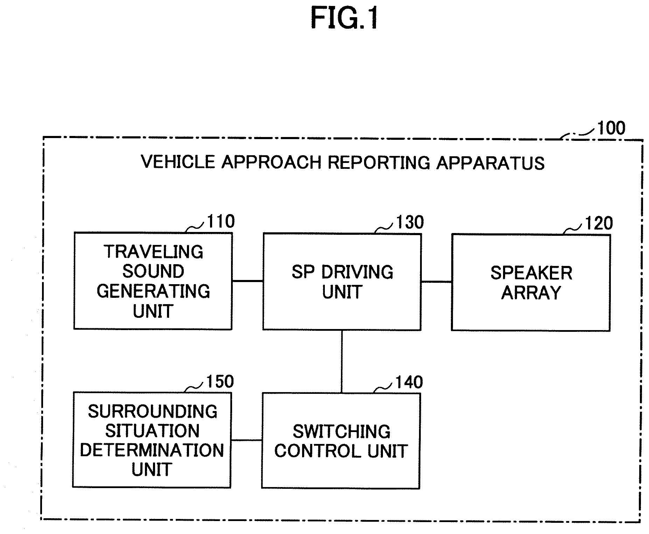

FIG. 1 is a drawing illustrating a configuration of the vehicle approach reporting apparatus according to an embodiment. The vehicle approach reporting apparatus 100 shown in FIG. 1 is mounted on a vehicle (e.g., electric vehicles) whose traveling sound is quiet, and outputs a simulated traveling sound to the surroundings of the vehicle to notify surrounding pedestrians and the like of the vehicle's approach. For this purpose, the vehicle approach reporting apparatus 100 includes a traveling sound generating unit 110, an ultrasonic speaker (parametric speaker) 120, an SP (speaker) driving unit 130, a switching control unit 140, and a surrounding situation determination unit 150.

The traveling sound generating unit 110 generates a predetermined sound to notify pedestrians and the like around the vehicle of the vehicle's approach. This generated sound is assumed to be a simulated traveling sound of the vehicle, but since the purpose is notifying of the vehicle's approach by sound, it is not necessary to be similar to the traveling sound, and any other notification sound may be used.

The ultrasonic speaker 120 reproduces audible sound having narrow directional characteristics by utilizing waveform distortion generated by radiating two kinds of ultrasonic waves having a large sound pressure. When a frequency of one ultrasonic wave (carrier wave) is f1, distortion components of 2f1, 3f1, 4f1, ... which are integer multiples of the frequency are generated. When the frequency of the other ultrasonic wave (carrier wave) is f2, distortion components of 2f2, 3f2, 4f2, ... which are integer multiples of the frequency are generated. In the case where both frequencies f1 and f2 are ultrasonic waves (sound having a frequency higher than the audible band of a human being), these integer multiples are also higher in frequency than the audible band, so that the human ear cannot hear them. However, when ultrasonic waves of such two kinds of carrier waves are simultaneously radiated, their difference tone (frequency is f2 - f1) and chord (frequency is f1 + f2) components are generated. By setting the frequency of the difference tone (f2 - f1) to be within the audible band, generated sound as audible sound can be radiated from the ultrasonic speaker 120. For example, when f1 is 41 kHz and f2 is 40 kHz, a difference tone of f2 - f1 = 1 kHz can be radiated. The ultrasonic speaker 120 may be configured as a speaker array in which a plurality of elements are combined.

The instantaneous speed of sound c of a plane acoustic wave can be expressed by the following formula.

[Formula 1]

$$c = c_0 + \beta u = c_0 + \beta \frac{p}{\rho_0 c_0}$$

Here, $\beta$ is a nonlinear parameter of the medium (constant), $\rho_0$ is the initial density of air (constant), $C_0$ is the initial velocity of sound wave (constant), and p is the instantaneous sound pressure (p = 0 at static pressure).

From the above formula, it can be seen that as the pressure p changes, the instantaneous sound velocity c also changes, and the waveform collapses as the sound wave progresses. This collapse appears as the above-mentioned integer times distortion.

For this reason, waveform collapsing is more likely to occur at high volume where the amount of change in the pressure p increases. In addition, this waveform collapsing cumulatively increases as the number of propagation times of the waveform in one cycle increases. When the propagation distance is the same, as the frequency increases, the number of propagation times of the waveform in one cycle increases and the waveform collapses more easily.

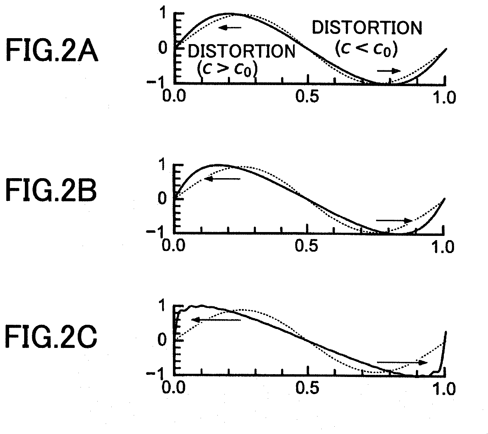

FIGS. 2A to 2C are exemplary drawings describing waveform collapse. For example, an ultrasonic wave having a sinusoidal waveform is radiated. In FIG. 2A, FIG. 2B, and FIG. 2C, the distance from the speaker 120 increases in this order. At a position close to the speaker 120, the waveform collapse is small (FIG. 2A), and as the distance increases, the waveform collapse gradually increases

(FIG. 2B). As the distance increases further, the waveform becomes a shock wave having an almost N-shaped waveform (This shock wave is referred to herein as the "N-wave"). The timing when the N-wave forms is the distortion maximum, and no distortion occurs even if the wave propagates thereafter. The fact that no distortion occurs means that no audible sound as a difference tone is generated when ultrasonic waves of two different frequencies are emitted.

The distance $x_s$ at which the N-wave forms can be calculated using the following formula.

[Formula 2]

$$x_s = \frac{\rho_0 c_0{}^3}{\omega \beta p_0}$$

Here, $p_0$ is the initial sound pressure and $\omega$ is an angular frequency (= 2nf).

Note that, when considering a vertical speaker array in which speakers are arranged in the radiation direction of sound waves, since sound waves are concentrated near the center where each speaker is arranged, the directional characteristics becomes narrow. Conversely, after the end of the region where each speaker is arranged and beyond the tip, the synthesized sound waves are diffused in a spherical shape, and the directivity becomes wide.

Since the difference tones generated by radiating ultrasonic waves of two frequencies are generated sequentially in the process of increasing distortion of the ultrasonic waves, these sequentially generated difference tones become virtual multiple sound sources, and the operation principle is the same as that of a vertical speaker array. Since the width of the directivity is determined by the length of the vertical array, the longer the distance xs at which the N-wave forms, the narrower the directivity becomes. Conversely, the shorter the distance xs at which the N-wave forms, the wider the directivity becomes.

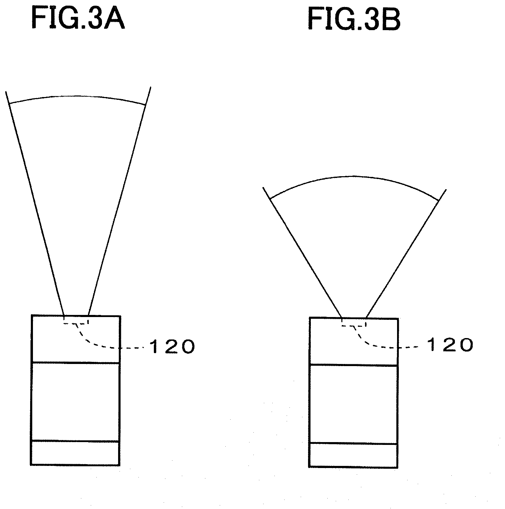

FIGS. 3A and 3B are drawings describing the sound field when the distance xs at which an N-wave forms is changed. As described above, since a wide directional characteristic is acquired by shortening the distance xs at which the N-wave forms, the speaker 120 installed at the front of the vehicle emits sound in a wide range (FIG. 3B). In this case, the diffusion of sound is large, and the sound is easily attenuated along the radiation direction, so that a pedestrian or the like nearby can hear the sound.

Conversely, since a narrow directional characteristic is obtained by lengthening the distance xs at which the N-wave forms, the speaker 120 installed at the front of the vehicle emits sound in a narrow range (FIG. 3A). In this case, the diffusion of sound is small, and the sound is hardly attenuated along the radiation direction, so that a pedestrian or the like from afar can hear the sound.

The SP driving unit 130 drives the ultrasonic speaker 120 by two kinds of carrier waves so that the sound generated by the traveling sound generating unit 110 becomes a difference tone, and changes the distance xs at which the N-wave forms.

The switching control unit 140 instructs the SP driving unit 130 to switch the distance $x_s$ at which the N-wave forms to the SP driving unit 130 in accordance with the width of the directional characteristic of the sound output from the speaker 120.

As described above, since the denominator of the formula to calculate the distance xs includes the initial sound pressure $p_0$ and the angular frequency $\omega$ (= 2nf), the distance $x_s$ until the N-wave can be changed by varying these values. The switching control unit 140 instructs the SP driving unit 130 to change the initial sound pressure $p_0$ and/or the carrier frequency f (= $\omega/(2\pi)$), and changes the distance xs at which the N-wave forms, thereby switching the direction characteristics of the ultrasonic wave emitted from the ultrasonic speaker 120 and the acoustic wave in the audible band between wide and narrow.

The surrounding situation determination unit 150 determines the surrounding situations. The switching instruction by the switching control unit 140 is performed based on the surrounding situations determined by the surrounding situation determination unit 150.

The above-described traveling sound generating unit 110 corresponds to the output sound generator, the SP driving unit 130 corresponds to the speaker driver, the switching control unit 140 corresponds to the shock wave distance changer, and the surrounding situation determination unit 150 corresponds to the surrounding situations determiner.

The vehicle approach reporting apparatus 100 of the present embodiment has such a configuration, and a specific example of the surrounding situation determination unit 150 for switching the direction characteristic between wide and narrow will be described below.

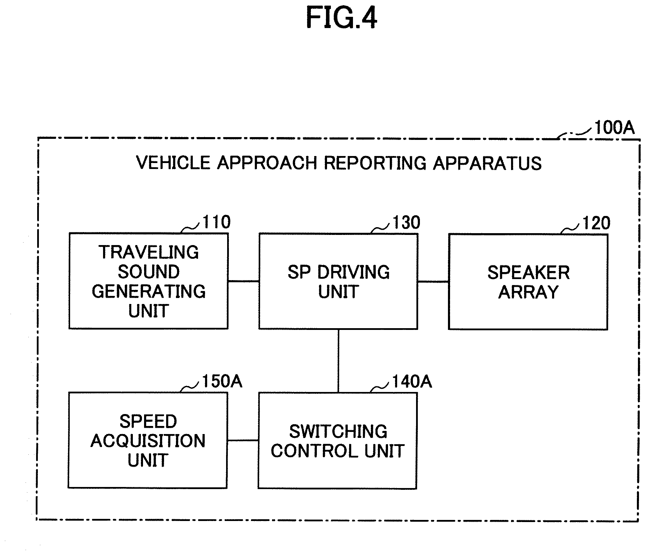

FIG. 4 is a drawing illustrating a specific example of switching the directional characteristics of the speaker 120 according to the traveling speed of the vehicle. The vehicle approach reporting apparatus 100A shown in FIG. 4 differs from the vehicle approach reporting apparatus 100 shown in FIG. 1 in that the surrounding situation determination unit 150 is implemented by the speed acquisition unit 150A, and the switching control unit 140 is replaced by the switching control unit 140A. The speed acquisition unit 150A corresponds to the speed acquirer.

The speed acquisition unit 150A acquires the traveling speed of the vehicle. For example, there may be a case where the traveling speed is detected based on a vehicle speed pulse output for each predetermined traveling distance, or a case where the traveling speed is acquired from a vehicle control unit or the like that performs display processing such as a speedometer. Since the relative speed of pedestrians and the like in the surroundings of the vehicle changes in accordance with the traveling speed of the vehicle itself, the traveling speed of the vehicle itself is also included in the "surrounding situations" in the present specification.

The switching control unit 140A instructs the SP driving unit 130 to increase the distance xs to the N-wave so that the directional characteristics of the sound output from the speaker 120 become narrow when the traveling speed acquired by the vehicle speed acquisition unit 150A is high, and to shorten the distance $x_s$ to the N-wave so that the directional characteristics of the sound output from the speaker 120 become wide when the traveling speed acquired by the speed acquisition unit 150A is low. For example, the initial sound pressure $p_0$ and/or the carrier frequency f corresponding to the long distance xs and the initial sound pressure $p_0$ and/or the carrier frequency f corresponding to the short distance $x_s$ are prepared in advance, and the initial sound pressure $p_0$ and/or the carrier frequency f corresponding to the length and the length of the distance xs after the switching are instructed to the SP driving unit 130.

Thus, when the vehicle is traveling at a low speed, pedestrians and the like around the vehicle can hear a sound widely notifying them that the vehicle is approaching, and when the vehicle is traveling at a medium speed or higher, a sound notifying them that the vehicle is approaching can be heard.

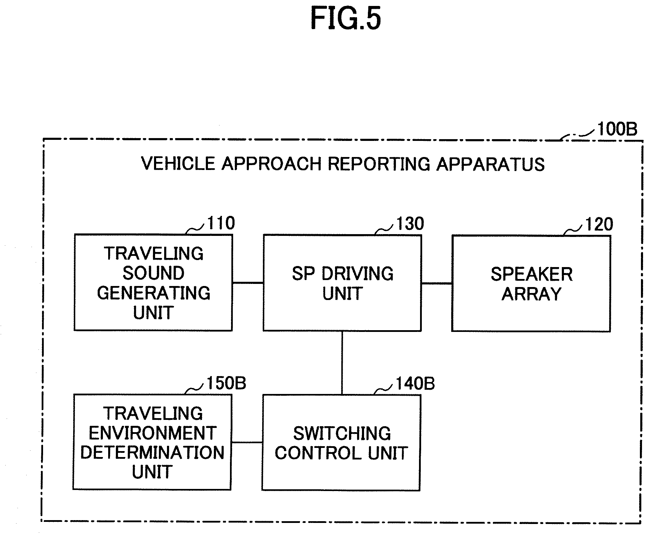

FIG. 5 is a drawing illustrating a specific example of switching the directional characteristics of the speaker 120 when the traveling location of the vehicle is either urban or suburban. The vehicle approach reporting apparatus 100B shown in FIG. 5 differs from the vehicle approach reporting apparatus 100 shown in FIG. 1 in that the surrounding situation determination unit 150 is implemented by the traveling environment determination unit 150B, and the switching control unit 140 is replaced by the switching control unit 140B. The traveling environment determination unit 150B corresponds to the traveling environment determiner.

The traveling environment determination unit 150B determines whether the vehicle is traveling at an urban area or a suburban area. For example, the traveling environment determination unit 150B may be a vehicle navigation apparatus that continuously or at regular intervals processes whether the vehicle is traveling at an urban area or a suburban area based on map data, or information indicating whether the vehicle is traveling at an urban area or a suburban area may be acquired from the vehicle navigation apparatus.

The switching control unit 140B instructs the SP driving unit 130 to increase the distance xs to the N-wave so that the directional characteristics of the sound output from the speaker 120 become narrow when the traveling environment determination unit 150B determines that the traveling location of the vehicle is a suburban area, and to shorten the distance xs to the N-wave so that the directional characteristics of the sound output from the speaker 120 become wide when the traveling environment determination unit 150B determines that the traveling location of the vehicle is an urban area.

As a result, in an urban area where there is a high possibility that many pedestrians and the like are in the surroundings of the vehicle, the sound to notify pedestrians and the like around the vehicle of the vehicle's approach can be widely heard, and in a suburban area where there are relatively few people, the sound to notify pedestrians and the like at a slightly distant place of the vehicle's approach can be heard.

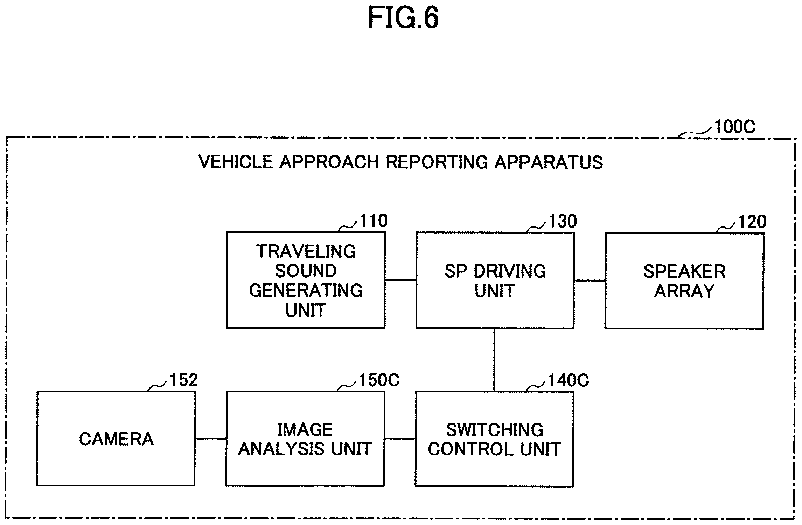

FIG. 6 is a drawing illustrating a specific example of determining the surrounding situations based on an image of the surrounding area. The vehicle approach reporting apparatus 100C shown in FIG. 6 differs from the vehicle approach reporting apparatus 100 shown in FIG. 1 in that the surrounding situation determination unit 150 is realized by a camera 152 and an image analysis unit 150C, and the switching control unit 140 is replaced with a switching control unit 140C. The camera 152 corresponds to the imaging unit, and the image analysis unit 150C corresponds to the image analyzer.

One or more cameras 152 are installed on the front or side of the vehicle, and capture an image of the surrounding area including at least the front of the vehicle. The image analysis unit 150C analyzes the position and the number of pedestrians and the like present in the surrounding area of the vehicle, the width of the travel road, the travel lane, and the surrounding area of the vehicle, based on the image obtained by the imaging of the camera 152.

The switching control unit 140C instructs the SP driving unit 130 to increase the distance xs to the N-wave so that the directional characteristics of the sound output from the speaker 120 become narrow, or to shorten the distance $x_s$ to the N-wave so that the directional characteristics of the sound output from the speaker 120 become wide, based on the situation around the vehicle itself analyzed by the image analysis unit 150C.

For example, as a result of analyzing the image, when there are many pedestrians or the like around the vehicle, a switching instruction is issued to widen the directional characteristics, and when there are no pedestrians or the like, a switching instruction is issued to narrow the directional characteristics. Thus, it is possible to switch the directional characteristics of the emitted sound of the speaker 120 between wide and narrow while accurately grasping the situation around the vehicle. The picked up image may be analyzed to perform the same processing as the speed acquisition unit 150A shown in FIG. 4, or the same processing as the traveling environment determination unit 150B shown in FIG. 5.

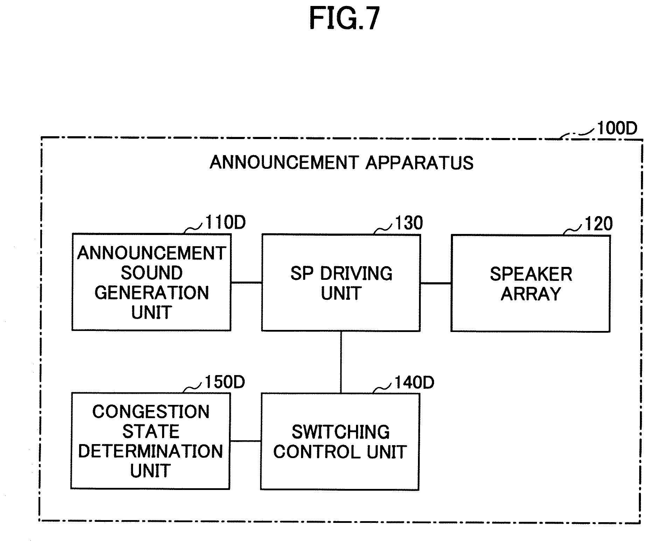

FIG. 7 is a drawing illustrating a modification of changing the directional characteristics of the speaker 120 according to the congestion state in the room. The announcement apparatus 100D shown in FIG. 7 is installed, for example, on the sales floor of a department store, and emits a predetermined announcement voice to some customers. The announcement apparatus 100D has a configuration similar to that of the vehicle approach reporting apparatus 100 shown in FIG. 1, and differs from the vehicle approach reporting apparatus 100 in that the surrounding situation determination unit 150 is implemented by the congestion state determination unit 150D, and the traveling sound generating unit 110 is replaced by the announcement sound generation unit 110D, and the switching control unit 140 is replaced by the switching control unit 140D. The announcement sound generation unit 110D corresponds to the output sound generator, and the congestion state determination unit 150D corresponds to the congestion state determiner.

The congestion state determination unit 150D determines the congestion state of customers in the surroundings (a specific area in a department store). This determination may be performed by analyzing an image captured by the camera 152 in the same manner as the image analysis unit 150C shown in FIG. 6, or it may be performed based on the detection result of a sensor provided at the entrance or exit of a customer.

Based on the state of surrounding congestion determined by the congestion state determination unit 150D, the switching control unit 140D instructs the SP driving unit 130 to lengthen the distance $x_s$ to the N-wave so that the directional characteristics of the announcement sound output from the speaker 120 become narrow, or to shorten the distance $x_s$ to the N-wave so that the directional characteristics of the announcement sound output from the speaker 120 become wide.

For example, when it is a quiet time and the number of customers in a specific area is small, a switching instruction is given to widen the directional characteristics of the announcement sound to be emitted in order to attract customers, and when it is a busy time and the number of customers in a specific area is large, a switching instruction is given to narrow the directional characteristics of the announcement sound to be emitted in order to be heard by only a certain customer. Thus, the directional characteristics of the emitted sound of the speaker 120 can be switched between wide and narrow accordance with the surrounding state of congestion.

The announcement apparatus 100D shown in FIG. 7 can also be used for other than the announcement sound of a department store. For example, in a museum, when the exhibition room is crowded with many students on a student tour or the like, a switching instruction is given to widen the directivity of the radiated announcement sound, and in other cases, a switching instruction is given to narrow the directivity of the radiated announcement sound.

Further, the present invention is not limited to these embodiments, but various variations and modifications may be made without departing from the scope of the present invention. In the above-described embodiment, either the long or the short of the distance xs up to becoming an N-wave is selected, but the long or the short of the distance $x_s$ up to becoming an N-wave may be alternately switched in a predetermined time to repeat the wide and the narrow directivity of the sound radiated from the speaker 120. As a result, the sound radiated from the speaker 120 can be heard in both the near and far spaces in the surroundings.

As described above, according to the present invention, when the distance traveled until the shock wave forms is long, since the difference tones of two kinds of carrier waves are repeatedly generated and synthesized during the time up to becoming the shock wave, these difference tones become virtual sound sources and are synthesized along the direction in which the acoustic wave travels, thereby narrowing the directivity. Conversely, when the distance traveled until the shock wave forms is short, the length in which the virtual sound source extends is short, and the acoustic wave is diffused in a spherical shape from the position where the virtual sound source disappears, thereby widening the directivity. Thus, by varying the distance until the shock wave occurs, the directional characteristics can be changed, and the output range of the sound radiated from the speaker can be switched.

**Claims**

1. A speaker system comprising:

   an output sound generator configured to generate a sound to be output;
   an ultrasonic speaker;
   a speaker driver configured to drive the ultrasonic speaker and output the sound generated by the output sound generator; and
   a shock wave distance changer configured to change a distance at which a sound wave output from the ultrasonic speaker becomes a shock wave after propagating through air.

2. The speaker system according to claim 1, wherein the shock wave distance changer is configured to change the distance by sending an instruction to the speaker driver to change an initial sound pressure of the sound wave output from the ultrasonic speaker.

3. The speaker system according to claim 1, wherein the shock wave distance changer is configured to change the distance by sending an instruction to the speaker driver to change a carrier frequency of the sound wave output from the ultrasonic speaker.

4. The speaker system according to claim 1, wherein the shock wave distance changer is configured to change the distance by sending an instruction to the speaker driver to change an initial sound pressure of the sound wave output from the ultrasonic speaker, and to change a carrier frequency of the sound wave output from the ultrasonic speaker.

5. The speaker system according to one of claims 1 - 4 further comprising:

   a surrounding situation determiner configured to determine surrounding situations,
   wherein the shock wave distance changer is configured to change the distance according to the surrounding situations determined by the surrounding situation determiner.

6. The speaker system according to claim 5, wherein the speaker system is configured to be mounted on a vehicle and is configured to output a sound to notify people around the vehicle of approach of the vehicle,

   wherein the surrounding situation determiner is a speed acquirer configured to acquire a traveling speed of the vehicle, and
   wherein the shock wave distance changer is configured to send an instruction to set the distance long such that directional characteristics of the sound output from the speaker become narrow when the traveling speed acquired by the speed acquirer is high, and set the distance short such that directional characteristics of the sound output from the speaker become wide when the traveling speed acquired by the speed acquirer is low.

7. The speaker system according to claim 5 or 6, wherein the speaker system is configured to be mounted on a vehicle and is configured to output a sound to notify people around the vehicle of approach of the vehicle,

   wherein the surrounding situation determiner is configured to determine whether a traveling location of the vehicle is in an urban area or a suburban area, and
   wherein the shock wave distance changer is configured to send an instruction to set the distance long such that directional characteristics of the sound output from the speaker become narrow when the traveling location of the vehicle is determined to be in a suburban area, and set the distance short such that directional characteristics of the sound output from the speaker become wide when the traveling location of the vehicle is determined to be in an urban area.

8. The speaker system according to one of claims 1 - 7, wherein the shock wave distance changer is configured to alternate the distance between long and short.

9. The speaker system according to one of claims 5 - 8,

   wherein the surrounding situation determiner includes an imaging unit configured to capture an image of surroundings, and an image analyzer configured to analyze the surrounding situations according to the image captured by the imaging unit, and
   wherein the shock wave distance changer is configured to switch the distance between long and short according to the surrounding situations analyzed by the image analyzer.

10. The speaker system according to one of claims 5 - 9,

    wherein the surrounding situation determiner is a congestion state determiner configured to determine a state of surrounding congestion, and
    wherein the shock wave distance changer is configured to switch the distance between long and short according to the surrounding state of congestion determined by the congestion state determiner.

# FIG.1

EP 4 561 104 A1

FIG.2A

FIG.2B

FIG.2C

# FIG.3A

# FIG.3B

- - 1 2 0

- - 1 2 0

# FIG.4

EP 4 561 104 A1

FIG.5

VEHICLE APPROACH REPORTING APPARATUS 100B

TRAVELING SOUND GENERATING UNIT 110

SP DRIVING UNIT 130

SPEAKER ARRAY 120

SWITCHING CONTROL UNIT 140B

TRAVELING ENVIRONMENT DETERMINATION UNIT 150B

# FIG.6

VEHICLE APPROACH REPORTING APPARATUS ~100C

TRAVELING SOUND GENERATING UNIT ~110

SP DRIVING UNIT ~130

SPEAKER ARRAY ~120

CAMERA ~152

IMAGE ANALYSIS UNIT ~150C

SWITCHING CONTROL UNIT ~140C

EP 4 561 104 A1

# FIG.7

EP 4 561 104 A1

Europäisches
Patentamt

European
Patent Office

Office européen
des brevets

# EUROPEAN SEARCH REPORT

**Application Number**

EP 24 21 3384

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2008 113190 A (NISSAN MOTOR) 15 May 2008 (2008-05-15) | 1-5,7-10 | INV. H04R1/32 |
| A | * figures 18,19 * <br> * paragraph [0044] - paragraph [0049] * <br> * paragraph [0010] * <br> - - - - - | 6 | H04R3/00 |

**TECHNICAL FIELDS SEARCHED (IPC)**

H04R

The present search report has been drawn up for all claims

| Place of search | Date of completion of the search | Examiner |
|---|---|---|
| Munich | 5 March 2025 | Moscu, Viorel |

EPO FORM 1503 03.82 (P04C01)

## ANNEX TO THE EUROPEAN SEARCH REPORT
## ON EUROPEAN PATENT APPLICATION NO.

EP 24 21 3384

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2025

| Patent document cited in search report | Publication date | Patent family member(s) | Publication date |
|---|---|---|---|
| JP 2008113190 A | 15-05-2008 | NONE | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011031695 A